# EUROPÄISCHE PATENTSCHRIFT

(11) **EP 0 686 545 B1**
(45) Veröffentlichungstag und Bekanntmachung des Hinweises auf die Patenterteilung: **09.09.1998**
(21) Anmeldenummer: 95201385.2
(22) Anmeldetag: 26.05.1995
(51) Int. Cl.: B62D 33/02

(54) **Bordwandverschluss**
Sideboard latching means
Fermeture de paroi latérale

(30) Priorität: 07.06.1994 BE 9400564
(43) Veröffentlichungstag der Anmeldung: 13.12.1995
(73) Patentinhaber: N.V. HENSCHEL ENGINEERING S.A., B-2610 Wilrijk (BE)
(72) Erfinder: Patt, Frank N.V.Henschel Enginnering S.A., B-2610 Wilrijk (BE)
(74) Vertreter: Donné, Eddy

(56) Entgegenhaltungen:
- EP-A- 0 585 952
- DE-A- 3 045 865
- DE-U- 9 016 416
- DK-A- 86 305

## Beschreibung

Diese Erfindung betrifft einen Bordwandverschluß, spezieller einen Verschluß für sogenannte Ladeklappen, wobei aufgehende Klappen oder dergleichen von Ladebehältern, in Bezug auf einen festen Teil dieser Ladebehälter, befestigt werden können müssen.

Die bis jetzt bekannten Bordwandverschlüsse bestehen in der Hauptsache aus einer Basis, die in der betreffenden Ladebehälterwand oder dergleichen eingearbeitet und befestigt wird, wobei in dieser Basis eine Verschlußklappe vorgesehen ist, die schwenkbar in der Basis angebracht ist und wobei mit dieser Verschlußklappe ein eigentlicher Riegel verbunden ist, dessen freies Ende geeigneterweise mit einem Anschlag zusammenwirken kann, der am festen Teil eines solchen Ladebehälters oder dergleichen vorgesehen ist, um die Ladeklappe an dem festen Ladebehälter zu befestigen.

Die vorgenannte Verschlußklappe wird mittels einer Feder stets in den Verriegelungsstand gezogen, wobei, in verriegeltem Zustand, zwischen der vorgenannten Basis und der Verschlußklappe, Mittel in Form eines Hakens und eines Anschlags vorgesehen sind, die gestatten, daß, wenn die vorgenannte Verschlußklappe sich in geschlossenem Zustand befindet, sie in Bezug zur Basis verankert ist.

Solche Bordwandverschlüsse sind bekannt aus DE-A-3045865 und DE-U-9016416.

Obwohl solche bekannten Bordwandverschlüsse unter normalen Umständen sehr zweckdienlich sind, hat sich herausgestellt, daß, wenn auf einen Ladebehälter oder dergleichen, der mit solchen Bordwandverschlüssen ausgestattet ist, Kräfte gemäß bestimmten Richtungen ausgeübt werden, spezieller plötzlich auftretende Kräfte, dadurch, daß der Ladebehälter und/oder die Ladeklappe Erschütterungen, Stößen oder dergleichen unterworfen sind, die vorgenannte Verankerung zwischen der Verschlußklappe und der Basis des Bordwandverschlusses sich unerwünschterweise lösen kann, wodurch die Verriegelung zwischen der bewegbaren Klappe oder Bordwand des Ladebehälters in Bezug auf die feste Konstruktion eines solchen Ladebehälters unterbrochen wird, mit allen Folgen hiervon.

Die vorliegende Erfindung hat einen Bordwandverschluß zum Gegenstand, der den vorgenannten Nachteil völlig ausschließt und wobei eine Verankerung zwischen der vorgenannten Basis und der Verschlußklappe des Bordwandverschlusses erhalten wird, die derart ist, daß das unerwünschte Lösen der Verschlußklappe in Bezug auf die Basis, gleich unter welchen Umständen oder Einflüssen, ausgeschlossen ist.

Zu diesem Zweck wird der Bordwandverschluß gemäß der Erfindung, der von dem bereits hier vorangehend genannten Typ ist, zwischen der Basis des Bordwandverschlusses und der Verschlußklappe hiervon mit einem zweiten, elastisch verformbaren Riegel mit Anschlag versehen.

Mit der Absicht, die Merkmale der Erfindung besser zu verdeutlichen, ist hiernach, als Beispiel ohne jeden einschränkenden Charakter, eine bevorzugte Ausführungsform beschrieben, unter Verweis auf die beigefügten Zeichnungen, worin:
Figur 1 auf schematische Weise perspektivisch einen Ladebehälter darstellt, der mit Bordwandverschlüssen gemäß der Erfindung versehen ist;
Figur 2 in größerem Maßstab den Teil darstellt, der in Figur 1 durch F2 angedeutet ist;
Figur 3 einen Querschnitt gemäß Linie III-III in Figur 2 darstellt;
Figur 4 ein Querschnitt gleich dem von Figur 3 ist, wobei sich jedoch der Bordwandverschluß in geöffnetem Zustand befindet.

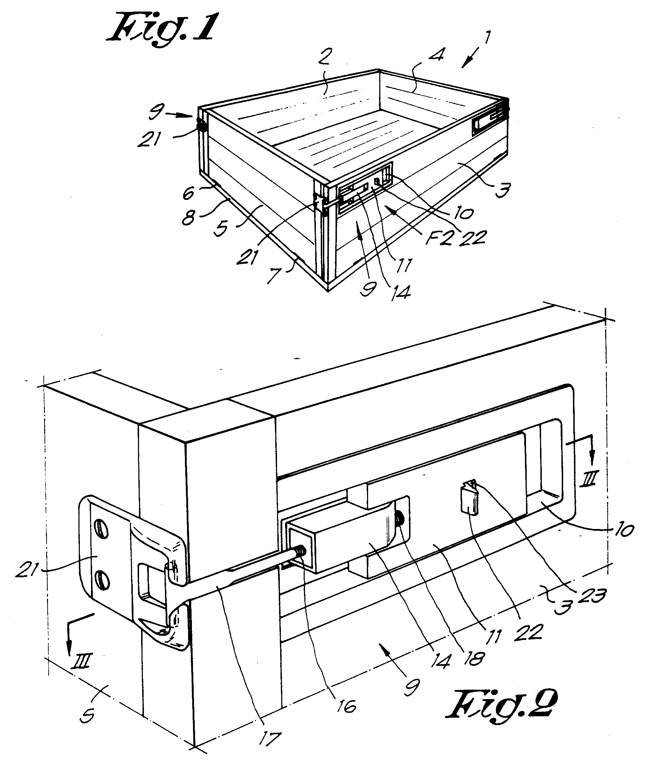

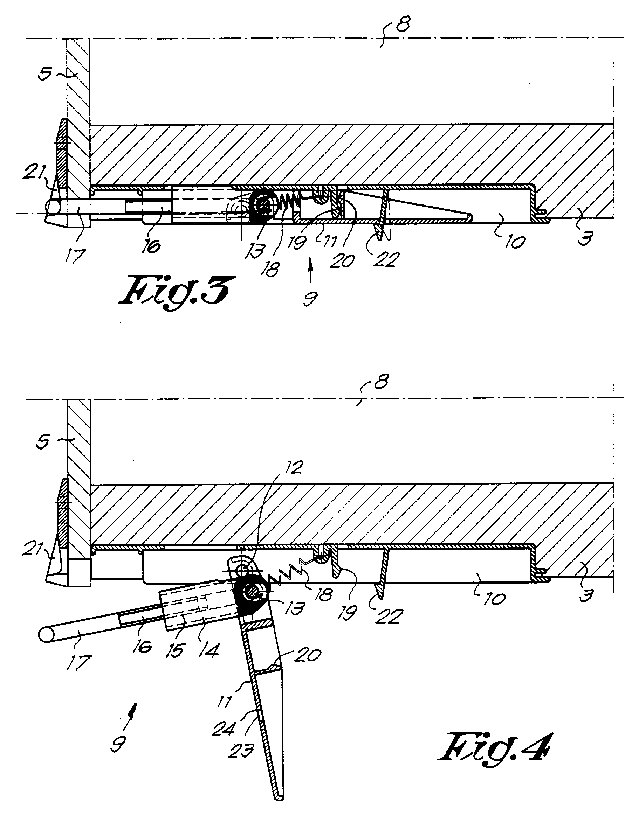

In Figur 1 ist ein Ladebehälter dargestellt, der in diesem Fall gebildet wird durch zwei herunterklappbare Seitenwände 2-3, eine Rückwand 4 und eine sogenannte Ladeklappe 5, die, mittels Scharnieren 6-7, herunterklappbar mit dem Stahlgestell 8 des Ladebehälters 1 verbunden ist.

Um die Ladeklappe 5 in nach oben geschwenktem Stand geeignet mit den Seitenwänden 2-3 eines solchen Ladebehälters 1 befestigen zu können, sind traditionell an jeder Seite eines solchen Ladebehälters 1 zwei Bordwandverschlüsse 9 vorgesehen.

Ein solcher Bordwandverschluß besteht aus einer Basis 10, die in die betreffende Wand 2, beziehungsweise 3, eingearbeitet ist, um eine möglichst flache Seitenwand zu behalten, wobei in dieser Basis eine Verschlußklappe 11 vorgesehen ist, die um einen Zapfen 12 frei drehbar ist.

In dieser Verschlußklappe 11 ist ebenfalls ein Zapfen 13 angebracht, um den ein kleiner Block 14 frei drehbar angebracht ist, in dem eine Gewindebohrung 15 vorgesehen ist, womit das mit einem Gewinde versehene Ende 16 eines T-förmigen Riegels 17 zusammenwirken kann, um die gesamte Länge des kleinen Blocks 14, beziehungsweise des Riegels 17, regeln zu können.

Die Verschlußklappe 11 ist schließlich mit einer Zugfeder 18 verbunden, die an ihrem zweiten Ende mit der vorgenannten Basis 10 verbunden ist, derart, daß diese Feder 18 die Verschlußklappe 11 stets in den geschlossenen Stand zu bewegen versucht.

Auf der Basis 10 ist ein Riegel vorgesehen, der, in geschlossenem Stand der Verschlußklappe 1, mit einem Anschlag 20 an der Verschlußklappe 11 zusammenwirkt, um diese Verschlußklappe in geschlossenem Zustand zu verriegeln, wobei diese Verriegelung meist derart ist, daß sie, indem auf die Verschlußklappe 11 mit der Hand eine Zugkraft ausgeübt wird, unterbrochen werden kann.

Auf den Wänden 4 und 5 sind weiterhin Anschläge 21 befestigt, womit das T-förmige Ende eines Riegels 17 auf bekannte Weise zusammenwirken kann, um diese Wände 5 in Bezug auf die Wände 2 und 3 zu verriegeln.

Gemäß der vorliegenden Erfindung ist auf der Basis 10 ein zusätzlicher Riegel 22 vorgesehen, dessen Haken durch eine Öffnung 23 in der Verschlußklappe 11 passieren kann und wobei dieser Riegel 22 in der dargestellten Ausführungsform aus einem federnden Fortsatz gebildet ist, derart, daß der eigentliche Haken des Riegels 22, nach dem Passieren durch die vorgenannte Öffnung 23, hinter der Außenwand der Verschlußklappe 11 eingreifen kann, wobei die Verschlußklappenwand als Anschlag 24 fungiert.

Der Riegel 22 bildet entweder ein Ganzes mit der Basis 10 oder nicht und kann, eventuell zusammen mit dieser Basis, aus Kunststoff hergestellt werden.

Wenn der Riegel 19 mit seinem Haken auf das hintere Ende der Basis 10 gerichtet ist, wird der Riegel 22 mit seinem Haken nach dem vorderen Ende dieser Basis 10 gerichtet sein oder umgekehrt.

Man erreicht auf diese Weise, daß, wenn die Verschlußklappe 11 geschlossen wird, einerseits der Riegel 19 auf den Anschlag 20 der Verschlußklappe 11 einwirkt, und, andererseits, auch der Riegel 22 auf die Außenwand der Verschlußklappe einwirkt, wobei nicht nur eine doppelte Verriegelung erreicht wird, sondern gleichzeitig eine Verriegelung in Gegenrichtung, derart, daß Erschütterungen, Stöße oder dergleichen, die auf eine der Wände des Ladebehälters 1 ausgeübt werden, auf keinen Fall das unerwünschte Öffnen der Verschlußklappe 11 verursachen können.

In der Tat ist es zum Öffnen dieser Klappe erforderlich, mit der Hand das Ende des Riegels 22 hinter der Außenwand der Verschlußklappe 11 wegzudrücken, derart, daß diese über den Riegel 19 und Anschlag 20 nach außen geschwenkt werden kann.

Erschütterungen, Stöße oder dergleichen, die auf eine der Wände des Ladebehälters 1 ausgeübt werden, auf keinen Fall das unerwünschte öffnen der Verschlußklappe 11 verursachen können.

In der Tat ist es zum öffnen dieser Klappe erforderlich, mit der Hand das Ende des Riegels 22 hinter der Außenwand der Verschlußklappe 11 wegzudrücken, derart, daS diese über den Riegel 19 und Anschlag 20 nach außen geschwenkt werden kann.

## Patentansprüche

1. Bordwandverschluß des Typs, der gebildet wird durch eine Basis (10), die in einer Ladebehälterwand (2-3) oder dergleichen eingearbeitet oder befestigt wird und wobei in dieser Basis eine schwenkbare Verschlußklappe (11) vorgesehen ist, die mit einem Riegel (17) verbunden ist, dessen freies Ende mit einem Anschlag (21) auf einer anliegenden Wand zusammenwirken kann und wobei zwischen der Basis (10) und der Verschlußklappe (11) ein Riegel (19) mit Anschlag (20) vorgesehen ist, dadurch gekennzeichnet, daß zwischen der Basis (10) und der Verschlußklappe (11) ein zweiter elastisch verformbarer Riegel (22) mit Anschlag (24) angebracht ist.

2. Bordwandverschluß gemäß Anspruch 1, dadurch gekennzeichnet, daß der zweite Riegel (22) auf der Basis (10) vorgesehen ist, während der Anschlag (24) durch die Außenwand der Verschlußklappe (11) gebildet wird.

3. Bordwandverschluß gemäß Anspruch 2, dadurch gekennzeichnet, daß in der Verschlußklappe (11) eine Öffnung (23) für den elastisch verformbaren Riegel (22) vorgesehen ist.

4. Bordwandverschluß gemäß einem der vorgenannten Ansprüche, dadurch gekennzeichnet, daß die Haken der Riegel (19) und (22) entgegengesetzt gerichtet sind.

5. Bordwandverschluß gemäß einem der vorgenannten Ansprüche, dadurch gekennzeichnet, daß der elastisch verformbare Riegel (22) mit der Basis (10) ein Ganzes bildet.

## Claims

1. Sideboard latching means of the type formed by a basis (10) which is incorporated or fixed in a loading platform wall (2-3) or similar and whereby in this basis a hingable closing flap (11) is provided which is connected to a locking element (17) the free extremity of which can cooperate with a stop (21) on an adjacent wall and whereby between the basis (10) and the closing flap (11) a locking element (19) with stop (20) is provided, characterized in that between the basis (10) and the closing flap (11) a second, elastically deformable locking element (22) with stop (24) is provided.

2. Sideboard latching means according to claim 1, characterized in that the second locking element (22) is provided on the basis (10), whereas the stop (24) is formed by the exterior wall of the closing flap (11).

3. Sideboard latching means according to claim 2, characterized in that an opening (23) for the elastically deformable locking element (22) is provided in the closing flap (11).

4. Sideboard latching means according to any of the preceding claims, characterized in that the hooks of the locking elements (19) and (22) are directed opposed to each other.

5. Sideboard latching means according to any of the preceding claims, characterized in that the elastically deformable locking element (22) forms a whole with the basis (10).

## Revendications

1. Fermeture de ridelle arrière, du type qui est formé par une base (10) qui est insérée dans ou fixée à une paroi de plate-forme de chargement (2-3) ou analogues, et dans laquelle on prévoit dans cette base un clapet pivotant (11) qui est relié à un verrou (17) dont l'extrémité libre peut coopérer avec une butée (21) sur une paroi adjacente, et dans laquelle entre la base (10) et le clapet (11), on prévoit un verrou (19) comprenant une butée (20), caractérisée en ce qu'entre la base (10) et le clapet (11) est appliqué un second verrou (22) muni d'une butée (24), apte à subir une déformation élastique.

2. Fermeture de ridelle arrière selon la revendication 1, caractérisée en ce que le second verrou (22) est prévu sur la base (10) tandis que la butée (24) est formée par la paroi externe du clapet (11).

3. Fermeture de ridelle arrière selon la revendication 2, caractérisée en ce qu'on prévoit dans le clapet (11) une ouverture (23) pour le verrou (22) apte à subir une déformation élastique.

4. Fermeture de ridelle arrière selon l'une quelconque des revendications précédentes, caractérisée en ce que les crochets des verrous (19) et (22) sont orientés dans des sens opposés.

5. Fermeture de ridelle arrière selon l'une quelconque des revendications précédentes, caractérisée en ce que le verrou (22) apte à subir une déformation élastique forme un tout avec la base (10).
